(19)

Europäisches
Patentamt
European
Patent Office
Office européen
des brevets

(11) **EP 2 256 633 A2**

(12) **EUROPEAN PATENT APPLICATION**

(43) Date of publication:
**01.12.2010 Bulletin 2010/48**

(51) Int Cl.:
***G06F 9/50*** *(2006.01)*

(21) Application number: **10250479.2**

(22) Date of filing: **15.03.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA ME RS**

(30) Priority: **25.05.2009 JP 2009125828**

(71) Applicant: **Hitachi, Ltd.**
**Chiyoda-ku**
**Tokyo 100-8280 (JP)**

(72) Inventors:
• **Tanaka, Tadashi**
  **Tokyo 100-8220 (JP)**

• **Mori, Yuichi**
  **Tokyo 100-8220 (JP)**
• **Tanaka, Shuichi**
  **Tokyo 100-8220 (JP)**
• **Kondo, Yuki**
  **Tokyo 100-8220 (JP)**
• **Jin, Yusuke**
  **Tokyo 100-8220 (JP)**
• **Oshima, Keishi**
  **Tokyo 100-8220 (JP)**

(74) Representative: **Calderbank, Thomas Roger et al**
**Mewburn Ellis LLP**
**33 Gutter Lane**
**London**
**EC2V 8AS (GB)**

(54) **Service provider management device, service provider management program, and service provider management method**

(57) For a distributed application execution environment where the execution of a business process is accomplished by combining services in a manner that suits the business process to be executed, technologies have been developed to allocate hardware resources necessary to execute services that constitute a business process. With the conventional technologies, however, when using existing hardware resources is not enough to satisfy a requested execution quality of a service, the service is executed with a quality lower than the requested level. The present invention makes it possible to purvey IT resources flexibly in a distributed processing environment such that the requested level of business process execution quality is met. The present invention flexibly changes the configuration of IT resources that execute services constituting a business process, so that a requested quality of the business process is met.

FIG.1

EP 2 256 633 A2

**EP 2 256 633 A2**

## Description

The present invention claims priority from Japanese patent application JP2009-125828 filed on May 25, 2009, the content of which is hereby incorporated by reference into this application.

The present invention relates to a technology of managing service providing nodes (service providers) in a distributed processing environment.

Technologies for constructing a company's information system flexibly have been developed based on the concept of Service Oriented Architecture (SOA) and the like. According to the concept of SOA, instead of deploying an applied business process program in a server for business process-based processing, each business process is broken intoapluralityof services, which are execution units smaller than business process units, to be implemented as service components and deployed in a distributed processing environment. Of these services, ones necessary for a business process to be executed are combined by a service provider management device and the processing of the business process is thus accomplished. This way, a change in business process flow or the like can be dealt with by merely modifying service components that need a modification. Dealing with a change in business process flow is even simpler in some cases where changing the order of executing services is all it takes, which helps an information system to keep up with changes in business environment fast. For SOA and other distributed application execution environments, a technology has been developed which allocates resources to each business process separately so that hardware resources necessary to execute services constituting a requested business process is allocated to the business process (Japanese Patent Laid-openPublicationNo. 2008-257694 (hereinafter referred to as Patent Document 1)).

With the technology described in Patent Document 1, there is no other way than executing a service at a quality lower than a requested level when using existing hardware resources is not enough to satisfy the requested level of service execution quality (mainly the quality of non-functional elements such as operating rate and response time), for example, when none of the existing hardware resources is enough to satisfy a requested execution quality level of a service that demands a high operating rate.

The present invention has been made in view of the above, and a preferred aim of the present invention is therefore to provide a technology of purveying IT resources such that a requested level of business process execution quality may be met in a distributed processing environment.

A service provider management technology according to the present patent application has the following configuration:

Hardware resources which execute services constituting a business process are provided in a combination that satisfies a requested quality of the business process.

According to an aspect of the present invention, there is provided a service provider management device which provides given business process information processing to a client terminal over a network, including: a storage section which stores execution flow information, execution quality information, component management information, and IT resource quality information, the execution flow information being used to identify at least one service that constitutes the business process information processing and an execution flow of the at least one service, the execution quality information being used to identify an execution quality that is required for the business process information processing, the component management information being used to identify an IT resource capable of executing a component that implements the service, the IT resource quality information being used to identify an execution quality that is provided by the IT resource; an execution flow management module which receives a request from the client terminal to provide the business process information processing, and refers to the storage section to identify execution flow information of a service that constitutes the requested business process information processing and execution quality information of the requested business process information processing; and a messaging processing module which, for each service that is identified by the execution flow information identified by the execution flow management module, reads the component management information to identify IT resources capable of executing the service; reads the IT resource quality information to determine whether or not an IT resource that satisfies the required execution quality by itself is included among the identified IT resources; when the IT resource that satisfies the required execution quality by itself is included, identifies the IT resource that satisfies the required execution quality by itself and requests the IT resource that satisfies the required execution quality by itself to execute the service; and when the IT resource that satisfies the required execution quality by itself is not included, identifies a combination of IT resources that together satisfy the required execution quality and requests the IT resources forming the combination to execute the service.

The present invention can provide a technology with which IT resources are purveyed flexibly in a distributed processing environment in a manner that satisfies a requested level of service execution quality.

These and other features, obj ects and advantages of the present invention will become more apparent from the following description when taken in conjunction with the accompanying drawings.

In the accompanying drawings:

FIG. 1 is a schematic diagram of a distributed processing system;

FIG. 2 is a diagram illustrating configurations of a client terminal and a service provider management server;

FIG. 3 is a diagram illustrating a configuration of a service executing server α;

FIG. 4 is a diagram illustrating a configuration of a service executing server β;

FIG. 5 is a hardware configuration diagram of the service provider management server;

FIG. 6 is a diagram illustrating an example of an execution flow definition table;

FIG. 7 is a diagram illustrating an example of an execution quality definition table;

FIG. 8 is a diagram illustrating an example of a component management table;

FIG. 9 is a diagram illustrating an example of an IT resource quality table;

FIG. 10 is a diagram illustrating an example of an execution quality table;

FIG. 11 is a diagram illustrating a processing flow of execution flow management processing;

FIG. 12 is a diagram illustrating a processing flow of execution quality management processing;

FIG. 13 is a diagram illustrating a processing flow of messaging processing;

FIG. 14 is a diagram illustrating a processing flow of component coordinate processing; and

FIG. 15 is a diagram illustrating a processing flow of IT resource allocation processing.

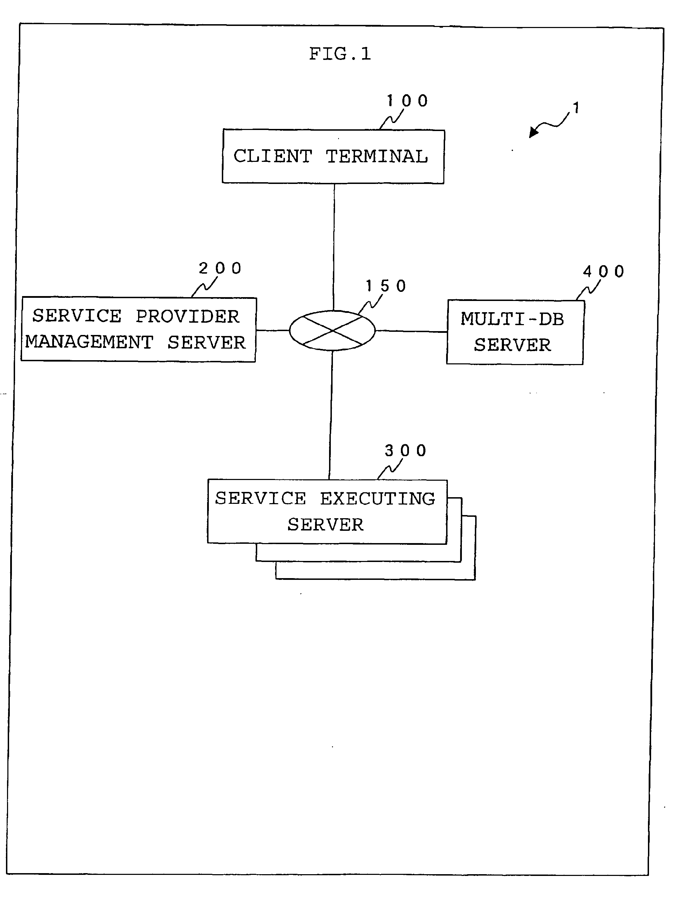

FIG. 1 is a diagram illustrating a distributed processing system 1 according to an embodiment of the present invention.

The distributed processing system 1 in the present invention includes a client terminal 100, service provider management server 200, a plurality of service executing servers 300, and a multi-database server 400, which manages various databases. The terminal and the servers can communicate with one another over a network 150.

The network 150 is usually a communication network that is managed by a user organization such as a Local Area Network (LAN). However, the network 150 is not limited thereto and may be the Internet or other public communication networks, or may be a communication network that partially contains a public circuit such as a Wide Area Network (WAN) or a Virtual Private Network (VPN).

The client terminal 100 receives a manipulation input (manipulation related to a business process to be executed) from a user, requests over the network 150 the service provider management server 200 to perform the process, receives information about a result of the process from the service provider management server 200, and presents the information to the user.

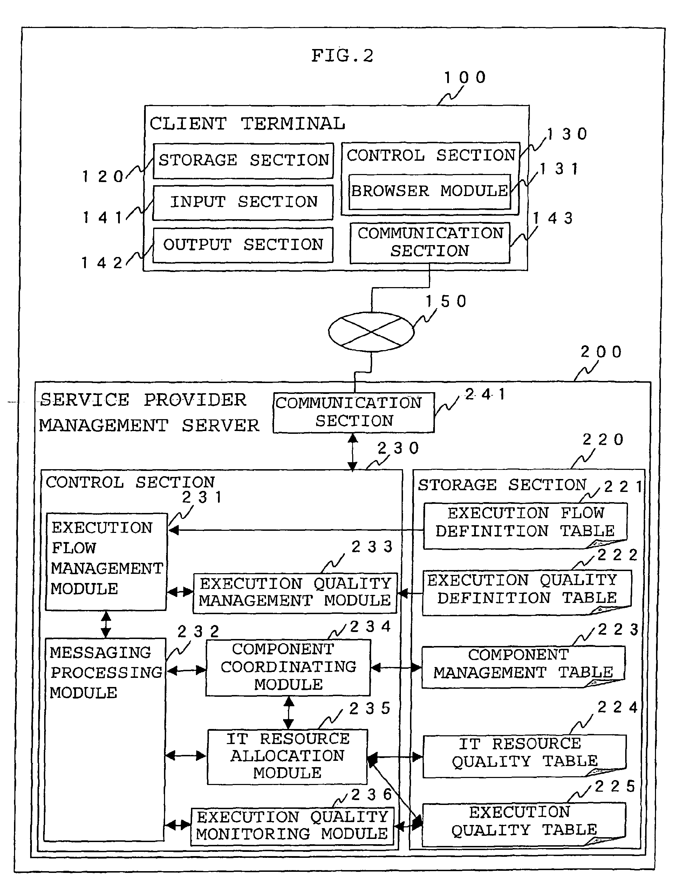

The client terminal 100 includes, as illustrated in FIG. 2, a storage section 120, a control section 130, an input section 141, an output section 142, and a communication section 143.

The storage section 120 stores various types of electronic information.

The control section 130 includes a browser module 131. The browser module 131 connects to the network 150 via the communication section 143, which is described later, to communicate with other nodes that are connected to the network 150. The browser module 131 also receives the user's manipulation input via the input section 141, and requests the output section 142 to output information to be presented to the user. For instance, the browser module 131 may receive a Web page or the like that has qualifying display information such as Hyper Text Markup Language (HTML), display the Web page, and send information input from a user on the Web page to a link destination server or the like.

The input section 141 receives an input of information from a user. The output section 142 outputs various types of information to be presented to the user. The communication section 143 connects with another node over the network 150, sends information to the other connected node, and receives information that is sent from the other connected node.

The service provider management server 200 identifies processing relevant to a service and which service executing server 300 is to execute the processing in response to a request or an instruction from the client terminal 100. The service provider management server 200 sends instructions to the identified service executing server 300 over the network 150, including an instruction to start the processing. The service provider management server 200 also constructs, by using HTML or the like, screen information which is relevant to the service and which is to be displayed on the client terminal 100, and sends the screen information to the client terminal 100.

As illustrated in FIG. 2, the service provider management server 200 includes a storage section 220, a control section 230, and a communication section 241.

The storage section 220 stores an execution flow definition table 221, an execution quality definition table 222, a component management table 223, an IT resource quality table 224, and an execution quality table 225.

The execution flow definition table 221 holds, for each business process, information for identifying services to be executed and the order (flow) of executing the services.

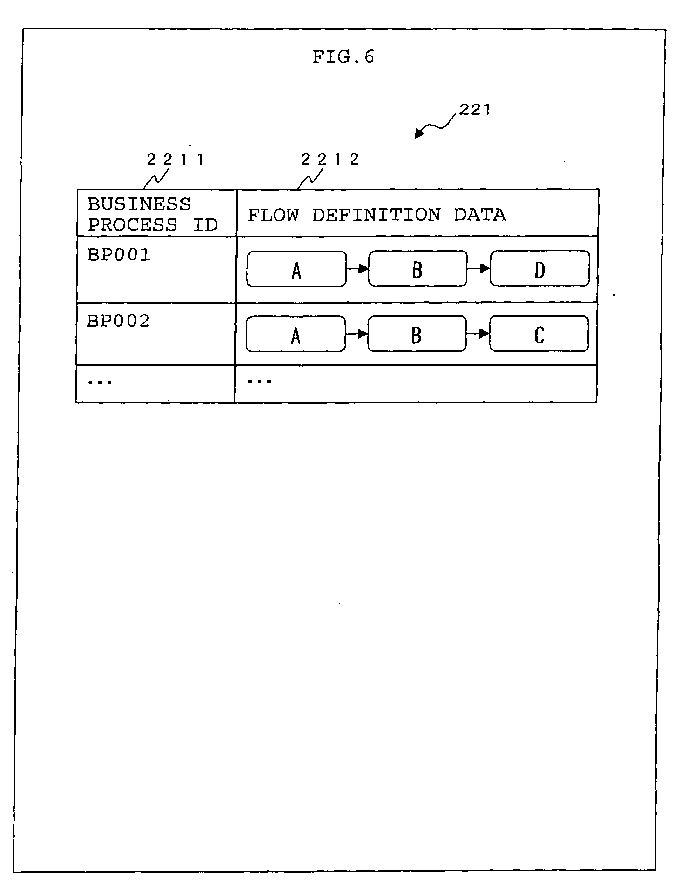

FIG. 6 is a diagram illustrating a configuration example of the execution flow definition table 221. Records stored in the execution flow definition table 221 have a business process ID field 2211 and a flow definition data field 2212 which respectively hold relevant information.

The business process field ID 2211 is a field where information for identifying a business process is stored. For example, ID information for identifying a business process such as inventory inquiry, order entry, money reception, or ordering is stored in the business process ID field 2211.

The flow definition data field 2212 is a field that stores information for identifying services to be executed for a business process identified in the business process ID field 2211 and information for identifying the order of the services. For example, the flow definition data field 2212 in this embodiment stores service names by which services are identified (e.g., "service A, " "service B," and "service C"), and information for identifying a service execution order, such as one in which the service A is executed first, then the service B, and then the service D. The information may be text data that follows a given format, such as Extensible Markup Language (XML), or may be program data written in a given program language (which includes an executable object file after compiling and linkage have been performed, a script executable by a given interpreter, and a given compiled file that is run on a given execution engine).

The execution quality definition table 222 holds, for each business process, execution quality request information about the operating performance of services to be executed, such as operating rate and response time.

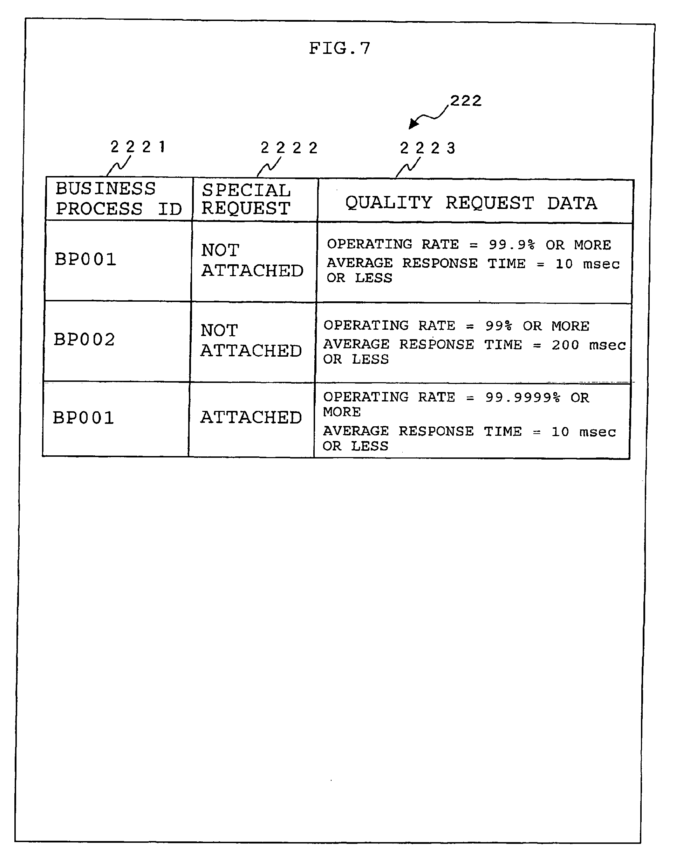

FIG. 7 is a diagram illustrating a configuration example of the execution quality definition table 222. Records stored in the execution quality definition table 222 have a business process ID field 2221, a special request field 2222, and a quality request data field 2223 which respectively hold relevant information.

The business process field ID 2221 is a field where information for identifying a business process is stored. For example, ID information for identifying a business process such as inventory inquiry, order entry, money reception, or ordering is stored in the business process ID field 2221.

The special request field 2222 is a field that stores information for identifying whether or not there is a special execution quality request in executing a business process. For instance, when different requesters request the same business process but different operating rates, the requested execution quality can be varied from one to another by adding a special request.

The quality request data field 2223 is a field that stores information for identifying a requested level of quality with respect to the execution of a business process. Request information such as an operating rate of 99.9% or higher and an average response time of 10 msec or less is stored. Other examples of the request information include a security level request and a log trace level request.

The component management table 223 holds, for each component ID of a component deployed in any of the service executing servers 300, information for identifying a name by which a service provided by the component is identified, features of an execution quality provided by the component, and the service executing server in which the component is deployed.

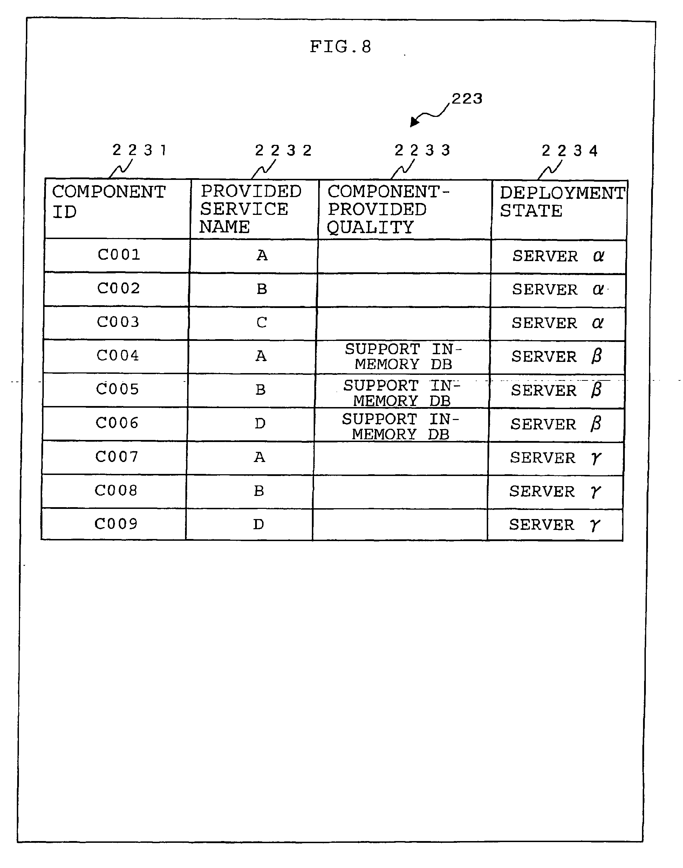

FIG. 8 is a diagram illustrating a configuration example of the component management table 223. Records stored in the component management table 223 have a component ID field 2231, a provided service name field 2232, a component-provided quality field 2233, and a deployment state field 2234 which respectively hold relevant information.

The component ID field 2231 is a field that stores component ID information for identifying a component which is deployed and run in one of the service executing servers 300 to provide a service. The term component refers to one or more programs that provide a single business process information processing service function.

The provided service name field 2232 is a field for storing a service name that is used to identify a service function provided by a component that is identified by the information stored in the component ID field 2231. Components having the same provided service name basically provide the same service function.

The component-provided quality field 2233 is a field that stores information for identifying a characteristic execution quality of a service provided by a component that is identified by the information stored in the component ID field 2231. The stored feature is a qualitative feature such as "support in-memory DB."

The deployment state field 2234 is a field that stores information for identifying an IT resource (hardware resource) in which a component that is identified by the information stored in the component ID field 2231 is deployed, namely, the service executing server 300 where the identified component is deployed.

The IT resource quality table 224 holds, for each resource ID used to identify one of the service executing servers 300, information for identifying an operating performance quality that is provided by the service executing server 300.

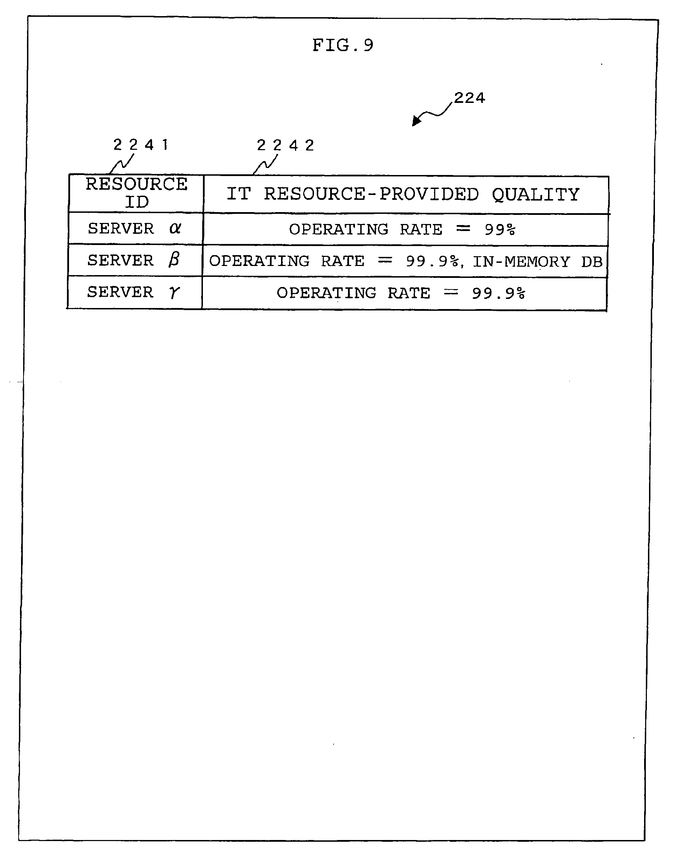

FIG. 9 is a diagram illustrating a configuration example of the IT resource quality table 224. Records stored in the IT resource quality table 224 have a resource ID field 2241 and an IT resource-provided quality field 2242 which respectively hold relevant information.

The resource ID field 2241 is a field that stores for each of the service executing servers 300 resource ID information by which the service executing server 300 is identified. Resource IDs in this embodiment are information for identifying the service executing servers 300, but may insteadbe information for identifying other hardware resources such as a storage device and a network device.

The IT resource-provided quality field 2242 is a field that stores information for identifying features (specifications) of an execution quality provided by the service executing server 300 that is identified by the information stored in the resource ID field 2241. An example of this information is specification information stating that the operating rate of the identified service executing server 300 is 99%.

The execution quality table 225 holds, for each resource ID used to identify one of the service executing servers 300 and for each component executed on the service executing server 300, a value indicating the actual performance of the component in terms of execution quality, for example, a value indicating the average response time.

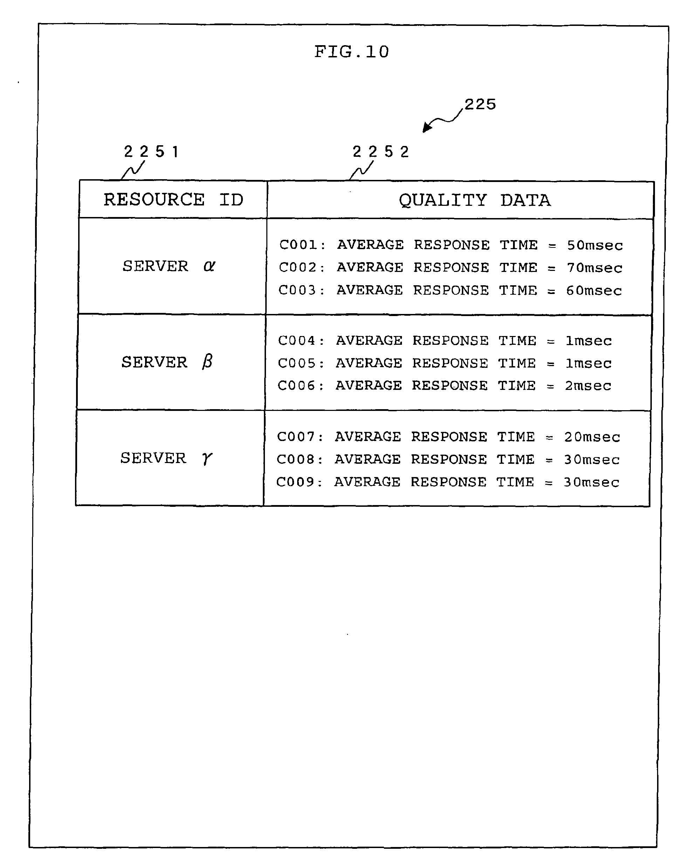

FIG. 10 is a diagram illustrating a configuration example of the execution quality table 225. Records stored in the execution quality table 225 have a resource ID field 2251, and a quality data field 2252 which respectively hold relevant information.

The resource ID field 2251 is a field that stores for each of the service executing servers 300 resource ID information by which the service executing server 300 is identified.

The quality data field 2252 is a field that stores information for identifying the actual performance of an execution quality for each component. For example, the information shows that the averaged actual response time of a component "C001" is 50 msec.

Returning to FIG. 2, the control section 230 includes an execution flow management module 231, a messaging processing module 232, an execution quality management module 233, a component coordinating module 234, an IT resource allocation module 235, and an execution quality monitoring module 236.

The execution flow management module 231 receives a request to execute a business process and, after identifying services to be executed and a requested execution quality level of the services, requests the messaging processing module 232 to perform processing. Specifically, the execution flow management module 231 receives a business process ID from the client terminal 100 over the network 150, and reads flow definition data that is associated with the business process ID out of the execution flow definition table 221. The execution flow management module 231 then requests the execution quality management module 233 to identify a requested execution quality level of the business process to be executed. Thereafter, the execution flow management module 231 hands over the flow definition data and information that indicates the requested execution quality level to the messaging processing module 232.

Receiving the flow definition data and the information that indicates the requested execution quality level from the execution flow management module 231, the messaging processing module 232 allocates IT resources to the services in accordance with the flow definition data and the requested execution quality to have the IT resources execute the services.

Specifically, the messaging processing module 232 receives the flow definition data and the information that indicates the requested execution quality level from the execution flow management module 231 and makes an inquiry to the component coordinating module 234 about the component deployment state. The messaging processing module 232 then requests the IT resource allocation module 235 to allocate an IT resource to a service such that an IT resource that meets the flow definition data and the requested execution quality level executes the service. The messaging processing module 232 requests the allocated service executing server 300 to execute the service.

The execution quality management module 233 identifies a requested execution quality of the business process that the execution flow management module 231 is requested to process.

Specifically, the execution quality management module 233 refers to the execution quality definition table 222 to obtain quality request data that is associated with the ID of the business process that the execution flow management module 231 is requested to process, and hands over the obtained quality request data to the execution flow management module 231. In the case where a special request is attached to the request to process the business process, the execution quality management module 233 identifies and hands over quality request data that is associated with the special request.

The component coordinatingmodule 234 receives an inquiry about deployment state from the messaging processing module 232, and searches the component management table 223 for candidate components capable of executing services that constitute the business process for which the inquiry is made. The component coordinating module 234 hands over the candidate components to the messaging processing module 232. The component coordinating module 234 also receives a request to deploy a component from the IT resource allocation module 235, deploys the component, and reflects the deployment state after the deployment on the component management table 223. Deploying a component includes accompanying processing, for example, deploying and activating a middleware function of an in-memory DB or the like that is used by the component, and preparations for the deployment of the component (e.g., the registration of the component to a configuration definition file such as a deployment descriptor).

The IT resource allocation module 235 allocates IT resources such that the execution quality requirement of the services constituting the business process to be executed is met.

Specifically, the IT resource allocation module 235 combines IT resources such that a quality required of the business process is met, based on the provided quality (specifications) of each IT resource and the actual performance in terms of quality, such as operating rate and response time, of each IT resource. For example, when a business process is required to be executed at an operating rate of 99.99999% or higher and none of the service executing servers 300 can satisfy the requested 99.9999% operating rate by itself, the IT resource allocation module 235 accomplishes the 99.9999% operating rate by running two service executing servers each having an operating rate of 99.9% concurrently.

The service executing server 300 that has an operating rate of 99.9% is out of operation 0.1% of the time, i.e. , with a probability of 1/1000. The integrated operating rate of two servers that are run concurrently is obtained generally by subtracting from 100% a probability that the servers are both out of operation simultaneously. In short, the operating rate is obtained by Equation (1) :

$$\text{Operating rate} = 1 - (1 - \text{the operating rate of the first server})$$
$$\times (1 - \text{the operating rate of the second server}) \ldots \text{Equation (1)}$$

The operating rate in Equation (1) is expressed as a decimal between 0 and 1.

In the above example, subtracting 1/1000 x 1/1000 = 1/1000000 from 1 yields 0.999999, which is 99.9999% in percentage. Anoperating rate of 99.9999% is thus accomplished.

Specific processing executed by the IT resource allocation module 235 is as follows:

The IT resource allocation module 235 searches information stored in the component management table 223 and identifies already deployed components that are capable of implementing a service to be executed. The IT resource allocation module 235 then refers to the IT resource quality table 224 to identify which one of the identified components has the highest operating rate. The IT resource allocation module 235 combines the component that has the highest operating rate with another of the deployed components that are capable of implementing the service to be executed, to thereby calculate the integrated operating rate of the two components and find a combination that satisfies the requested operating rate quality. The found combination is allocated as an object to be executed.

Alternatively, the IT resource allocation module 235 may allocate as an object to be executed a combination that produces the lowest operating rate among all combinations that satisfy the requested operating rate quality. This way, IT resources to be allocated are leveled as much as possible and the cost effectiveness of IT resources is kept high.

The IT resource allocation module 235 refers to the IT resource quality table 224 to identify which one of the identified components has the highest operating rate and then identify the component that has the second highest operating rate. The IT resource allocation module 235 obtains an operating rate that is achieved when these two components are executed in combination, and determines whether or not the obtained operating rate meets the requested operating rate quality. In the case where the requested quality is not satisfied by the two components, the operating rate may be enhanced by increasing the number of components that are in operation concurrently. A high operating rate is thus accomplished by combining servers that are not so high in operating rate, namely, IT resources that have excellent cost effectiveness.

Specifics of processing executed by the IT resource allocation module 235 to fulfill a requested operating rate quality have been described above. The description given below is about specifics of processing for accomplishing a requested response time quality.

The IT resource allocation module 235 searches information stored in the component management table 223 and identifies already deployed components that are capable of implementing a service to be executed. The IT resource allocation module 235 then refers to the execution quality table 225 to identify which combination of the identified components has the shortest response time. The IT resource allocation module 235 determines whether or not the total response time of components constituting the identified combination meets the requested response time quality and, when it does, allocates this combination as an object to be executed.

When the total response time does not meet the requested response time quality, the IT resource allocation module 235 calculates the ratio of the total response time and the requested response time as the degree of accomplishment of the requested response time, and obtains an integer by rounding the value of the ratio up to the next whole number. The IT resource allocation module 235 increases the number of service executing servers in which the components in question are deployed to a number calculated by multiplying the number of service executing servers that currently have the components by the obtained integer.

The IT resource allocation module 235 increases the number of the service executing servers 300 bynewlydeploying the components in question in a number of service executing servers 300 that makes up for a shortage. The IT resource allocation module 235 searches the component management table 223 for servers in which fewer components that implement a service to be executed are deployed. The IT resource allocation module 235 requests the component coordinating module 234 to deploy the components in question in as many servers as the determined number, starting from the server that has the smallest number of components deployed therein and moving on to servers that have more components.

In this manner, the IT resource allocation module 235 calculates a value indicating the actual response time and increases the number of servers where components are run depending on the degree of response time accomplishment, thereby making sure that the actual response time meets a requested quality in the future.

The execution quality monitoring module 236 collects from each of the service executing servers 300 an actual quality obtained as a result of actually putting a component that implements a service into operation. The collected actual quality is stored in the execution quality table 225. For example, the execution quality monitoring module 236 collects from each of the service executing servers 300 an average response time within a given period which is calculated by recording, for each component, for the given period, a response time from the reception of a processing request to the transmission of a processing result in response. The average response time is stored as response information in the execution quality table 225.

The communication section 241 connects to other nodes over the network 150 to receive information from the connected other nodes and to send information to the connected other nodes.

The service executing servers 300 are servers that execute processing by running components which implement services in accordance with requests and instructions given from the service provider management server 200 over the network 150.

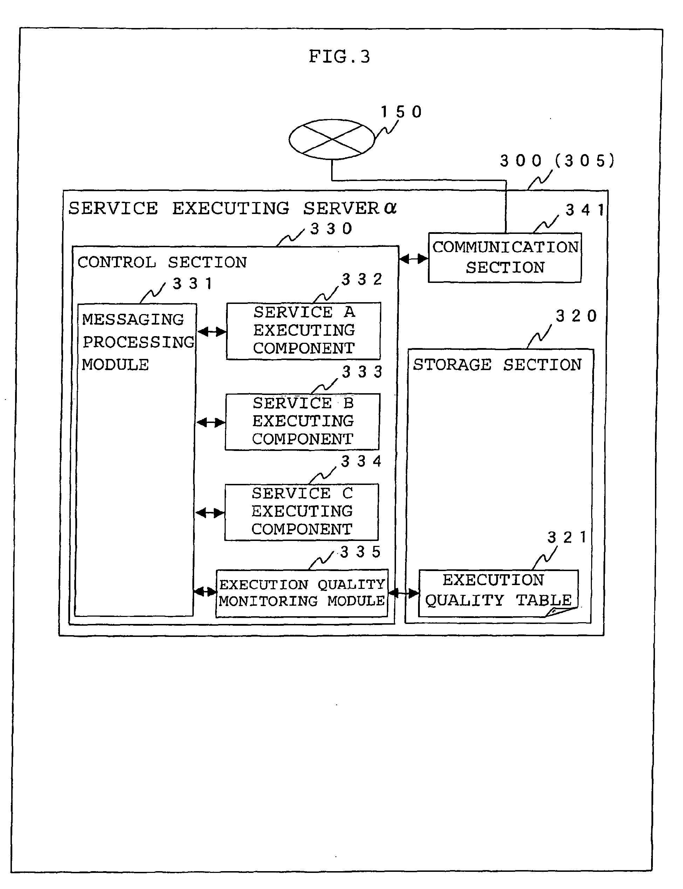

FIG. 3 illustrates a configuration of a service executing server 305 (hereinafter referred to as service executing server α), which is one of the service executing servers 300 and executes the services A, B, and C.

The service executing server α has a storage section 320, a control section 330, and a communication section 341.

The storage section 320 stores an execution quality table 321 and various types of electronic information. The execution quality table 321 is the same table as the execution quality table 225 of the service provider management server 200 described above, and the description is not repeated.

The control section 330 includes a messaging processing module 331, a service A executing component 332, a service B executing component 333, a service C executing component 334, and an execution quality monitoring module 335.

The messaging processing module 331 receives a request to execute a service from the service provider management server 200, identifies which one of the service A executing component 332, the service B executing component 333, and the service C executing component 334 is to execute the service, and makes the identified component execute the service.

The service A executing component 332, the service B executing component 333, and the service C executing component 334 are a component that executes the service A, a component that executes the service B, and a component that executes the service C, respectively. Each component contains at least one program.

The execution quality monitoring module 335 collects for each component deployed in the service executing server α an actual quality which is obtained as a result of putting the component into operation, and stores the actual quality in the execution quality table 321. For example, the execution quality monitoring module 335 calculates for each component an average response time within a given period by recording for the given period a response time from the reception of a processing request to the transmission of a processing result in response. The average response time is stored in the execution quality table 321. The execution quality monitoring module 335 also retrieves information about its own server from the execution quality table 321 and sends the information upon request from the execution quality monitoring module 236 of the service provider management server 200.

The communication section 341 connects to other nodes over the network 150 to receive information from the connected other nodes and to send information to the connected other nodes.

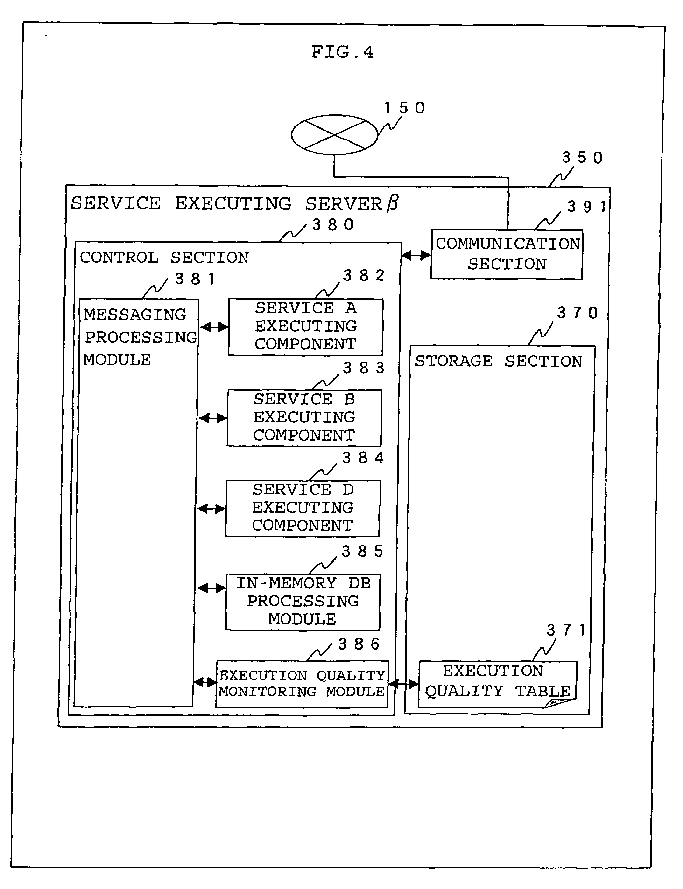

FIG. 4 illustrates a configuration of a service executing server 350 (hereinafter referred to as service executing server β), which is one of the service executing servers 300, executes the services A, B, and D, and is enhanced in execution speed by accessing an in-memory DB instead of accessing an on-disk database.

The service executing server β has a storage section 370, a control section 380, and a communication section 391.

The storage section 370 stores an execution quality table 371 and various types of electronic information. The execution quality table 371 is the same table as the execution quality table 225 of the service provider management server 200 described above, and the description is not repeated.

The control section 380 includes a messaging processing module 381, a service A executing component 382, a service B executing component 383, a service D executing component 384, an in-memory DB processing module 385, and an execution quality monitoring module 386.

Of the processing modules that constitute the control section 380, the messaging processing module 381, the service A executing component 382, the service B executing component 383, and the execution quality monitoring module 386 have the same configurations as those of the messaging processing module 331, service A executing component 332, service B executing component 333, and execution quality monitoring module 335 of the service executing server α, respectively. Descriptions on these processing modules are therefore omitted here.

The service D executing component 384 is a component that executes the service D and contains at least one program.

The in-memory DB processing module 385 copies data of a database that is one of the databases kept on the multi-DB server 400 and that is accessed by the components deployed in the service executing server β (components that execute the services A, B, and D), and keeps the copied data in a memory on the service executing server β. The in-memory DB processing module 385 receives a request to input or output data to or from a database that is accessed during the service A, B, or D, and performs input/output processing as requested on the local memory (without communicating with the multi-DB server 400). Data access processing is thus finished faster than when it is the multi-DB server 400 that is accessed.

The multi-DB server 400 uses databases on a storage disk of the multi-DB server 400 to manage data that is accessed by the service executing servers 300 in executing services. The multi-DB server 400 has a control section (not shown), which receives a request to perform such processing as reference, deletion, update, and addition on information in the databases, accesses the information in the databases, and sends a result to the requester of the processing. The databases can be of various types including the tree type, the relational type, and the object-oriented type.

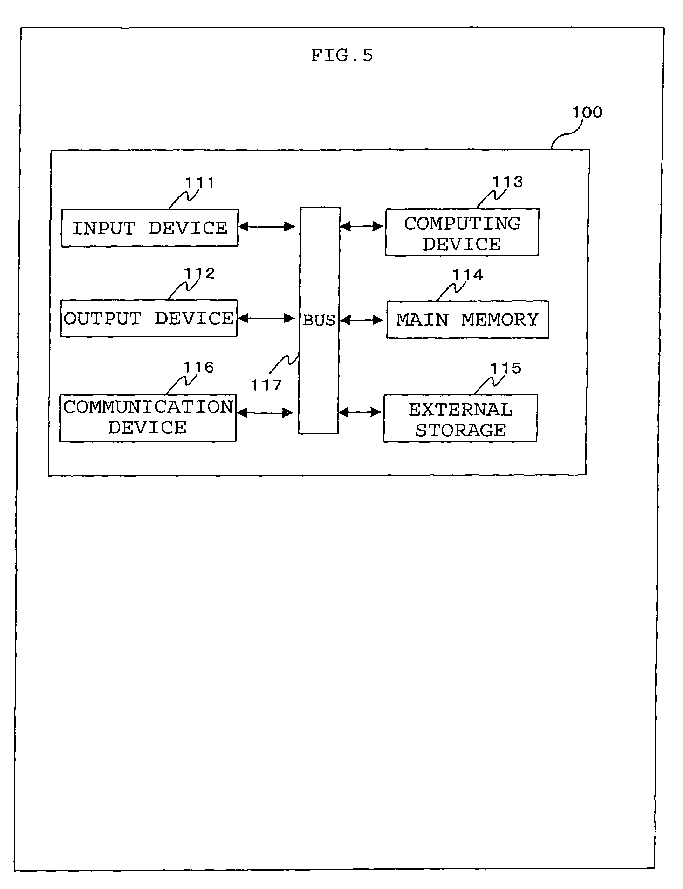

FIG. 5 is a diagram illustrating a hardware configuration of the client terminal 100 according to this embodiment.

The client terminal 100 in this embodiment is a computer such as a personal computer (PC), a workstation, a server machine, a cell phone terminal of various types, or a Personal Digital Assistant (PDA).

The client terminal 100 includes an input device 111, an output device 112, a computing device 113, a main memory 114, external storage 115, a communication device 116, and a bus 117 which connects these devices with one another.

The input device 111 is a device that receives an input, for example, a keyboard and a mouse, or a stylus or other types of pointing device.

The output device 112 is a device that displays data, for example, a display monitor.

The computing device 113 is a central processing unit (CPU) or other types of computing device.

The main memory 114 is a memory device, for example a Random Access Memory (RAM).

The external storage 115 is non-volatile storage such as a hard disk or a flash memory.

The communication device 116 is a wireless communication device which performs wireless communication through an antenna, or a wire communication device which performs wire communication through a network or a cable.

The browser module 131 of the client terminal 100 is implemented by a program that causes the computing device 113 of the client terminal 100 to perform processing.

This program is stored in the main memory 114 or the external storage 115 and loaded onto the main memory 114 to be executed by the computing device 113.

The storage section 120 of the client terminal 100 is implemented by the main memory 114 or external storage 115 of the client terminal 100.

The input section 141 of the client terminal 100 is implemented by the input device 111 of the client terminal 100.

The output section 142 of the client terminal 100 is implemented by the output device 112 of the client terminal 100.

The communication section 143 of the client terminal 100 is implemented by the communication device 116 of the client terminal 100.

Though not shown in the drawings, the service provider management server 200, the service executing servers 300, and the multi-DB server 400 have the same hardware configurations as that of the client terminal 100. However, the service provider management server 200, the service executing servers 300, and the multi-DB server 400 may not include devices that correspond to the input device 111 and output device 112 of the client terminal 100, namely, hardware devices that have functions of inputting data from and outputting data to a user.

The execution flowmanagement module 231, messagingprocessing module 232, execution quality management module 233, component coordinating module 234, IT resource allocation module 235, and execution quality monitoring module 236 of the service provider management server 200 are implemented by a program that causes the computing device 113 of the service provider management server 200 to perform processing.

This program is stored in the main memory 114 or the external storage 115 and loaded onto the main memory 114 to be executed by the computing device 113.

The messaging processing module 331, service A executing component 332, service B executing component 333, and service C executing component 334 of the service executing server $\alpha$ are implemented by a program that causes the computing device 113 of the service executing server $\alpha$ to perform processing.

Similarly, the messaging processing module 381, service A executing component 382, service B executing component 383, and service D executing component 384 of the service executing server $\beta$ are implemented by a program that causes the computing device 113 of the service executing server $\beta$ to perform processing.

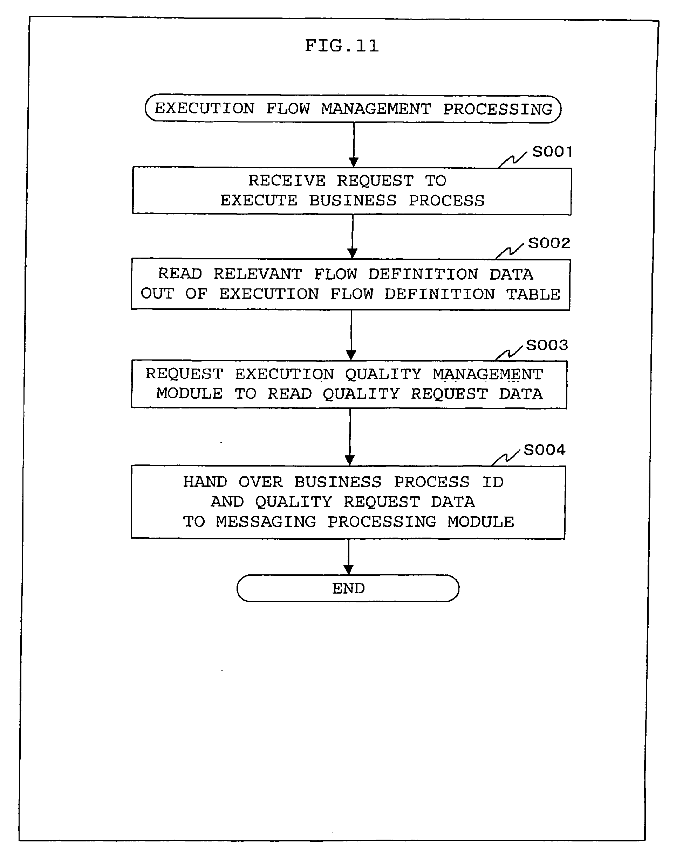

Execution flow management processing according to this embodiment is outlined next with reference to FIG. 11.

FIG. 11 is a diagram illustrating a flow of execution flow management processing.

The execution flow management module 231 first receives a request to execute a business process from the client terminal 100. The execution flow management module 231 receives information about whether or not there is special request information along with the business process execution request (Step S001). Specifically, the execution flow management module 231 receives execution request information, which contains business process ID specifying information specified by the user via the client terminal 100, and, as optional specification information, information about whether or not there is special request information.

The execution flow management module 231 next reads relevant flow definition data out of the execution flow definition table 221 (Step S002). Specifically, the execution flow management module 231 searches the execution flow definition table 221 with the business process ID that is contained in the execution request information received in Step S001 as a key, to thereby identify a record whose business process ID field 2211 holds this business process ID and read information out of the flow definition data field 2212 of the identified record.

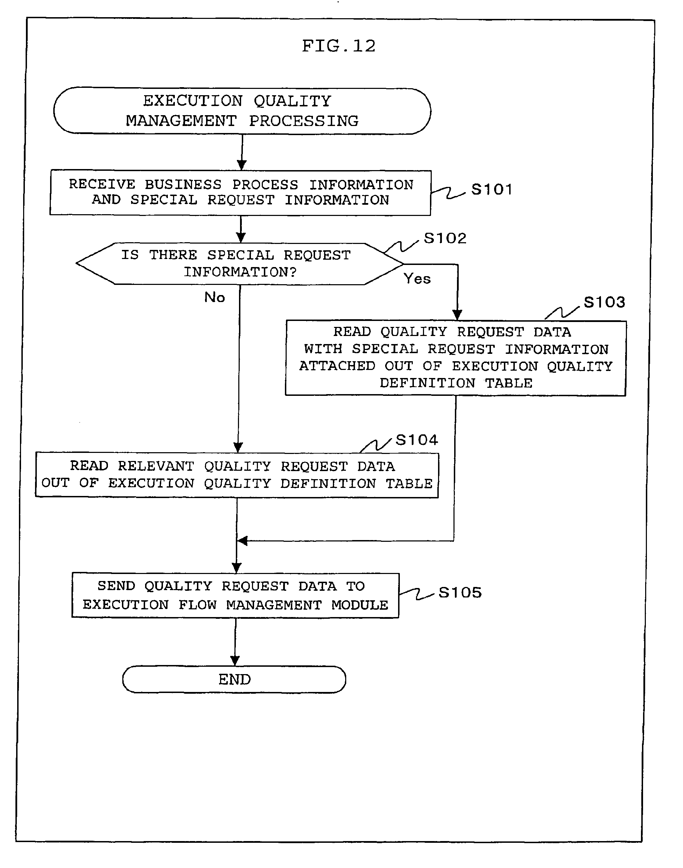

The execution flow management module 231 then requests the execution quality management module 233 to read quality request data (Step S003). Specifically, the execution flow management module 231 informs the execution quality management module 233 of the business process ID information and of the presence or absence of special request information, and receives information that is stored in the quality request data field 2223 of the execution quality definition table 222. A concrete description on this processing is given with reference to an execution quality management processing flow of FIG. 12.

FIG. 12 is a diagram illustrating the flow of execution quality management processing. The execution quality management processing is started when the execution quality management module 233 receives a request from the execution flow management module 231 in Step S003 of the execution flow management processing.

The execution quality management module 233 first receives a business process ID and special request information (Step S101).

The execution quality management module 233 next determines whether or not there is special request information "attached" (Step S102).

In the case where special request information is "attached" ("Yes" in Step 102), the execution quality management module 233 identifies which record in the execution quality definition table 222 has the business process ID received in Step S101 as information stored in the business process ID field 2221 and "attached" as information stored in the special request field 2222. The execution quality management module 233 reads information out of the quality request data field 2223 of the identified record. The execution quality management module 233 then proceeds to Step S105 (Step S103).

In the case where special request information is "not attached" ("No" in Step 102), the execution quality management module 233 identifies which record in the execution quality definition table 222 has the business process ID received in Step S101 as information stored in the business process ID field 2221 and "not attached" as information stored in the special request field 2222. The execution quality management module 233 reads information out of the quality request data field 2223 of the identified record (Step S104).

The execution quality management module 233 sends the quality request data read in Step S103 or Step S104 to the execution flow management module 231, which has called up the execution quality management module 233 (Step S105).

The flow of the execution quality management processing has now been described.

By executing the execution quality management processing, an execution quality requirement of a business process can be identified.

The description returns to Step S004 of the execution flow management processing of FIG. 11.

The execution flow management module 231 subsequently hands over the business process ID and the quality request data to the messaging processing module 232 and simultaneously makes a request to execute the business process (Step S004).

The flow of the execution flow management processing has now been described.

By executing the execution flow management processing, the service provider management server 200 can identify which service needs to be executed for a business process that is requested by the client terminal 100 to be executed, and what execution quality requirement is to be met in executing the business process.

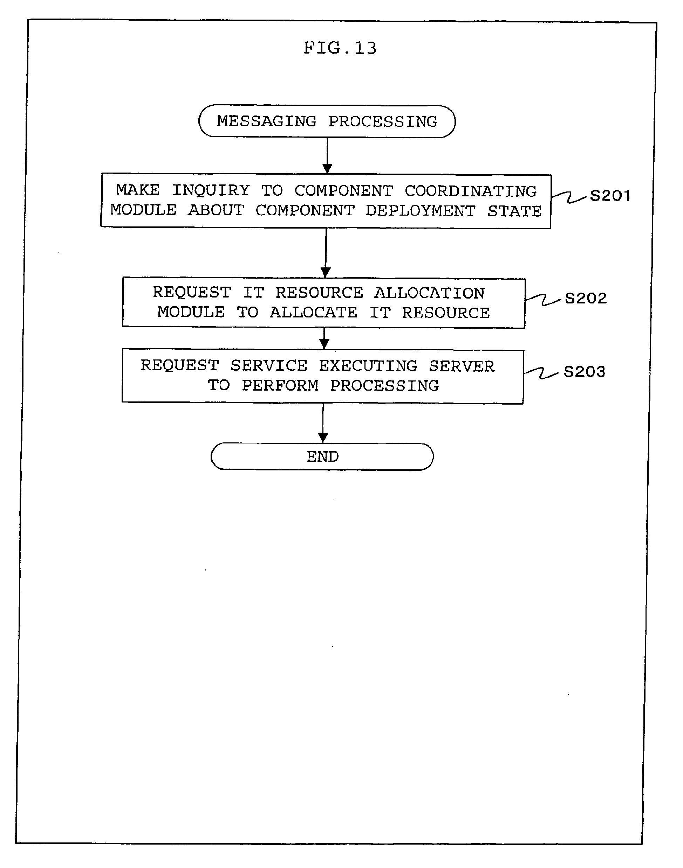

Described next with reference to FIG. 13 is messaging processing which is executed by the messaging processing module 232 upon receiving the business process execution request in Step S004 of the execution flow management processing of FIG. 11.

FIG. 13 is a diagram illustrating the flow of messaging processing. The messaging processing is started when a request to start executing is made in Step S004 of the execution flow management processing or on other occasions.

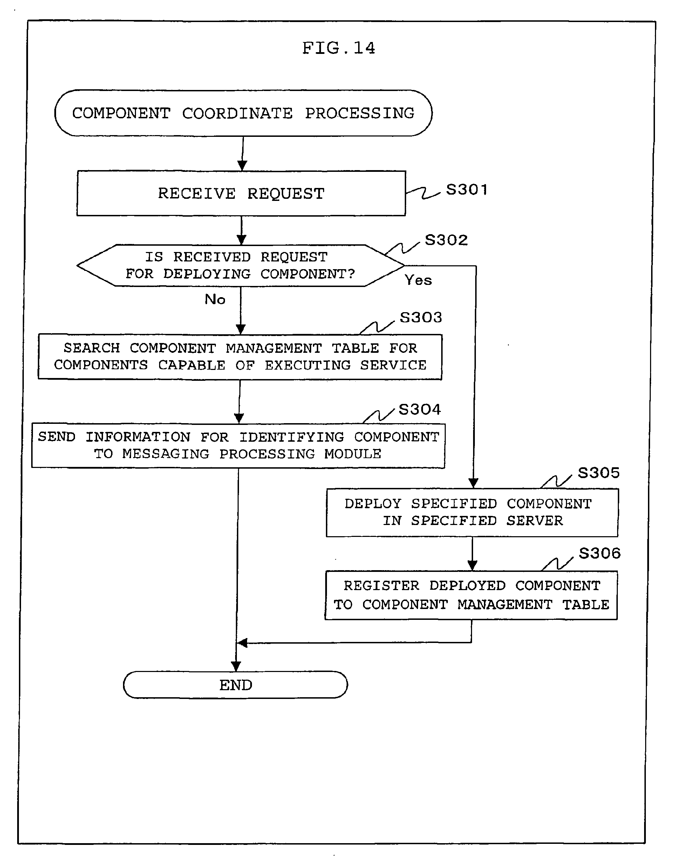

The messaging processing module 232 first makes an inquiry to the component coordinating module 234 about component deployment state (Step S201). Specifically, the messaging processing module 232 hands over a business process ID and its associated flow definition data to the component coordinating module 234 in order to request to identify a component, and receives candidate components to be executed from the component coordinating module 234. Processing executed by the component coordinating module 234 in response to the request is described with reference to a component coordinate processing flow of FIG. 14.

FIG. 14 is a diagram illustrating the flow of component coordinate processing. The component coordinating module 234 first receives a request (Step S301). Specifically, the component coordinating module 234 receives information containing the type of the request from the module that has called up the component coordinating module 234.

The component coordinating module 234 next determines whether or not the received request is a request to deploy a component (Step S302). When the received request is not a component deploying request ("No" in Step S302), the component coordinating module 234 searches the component management table 223 for a component that implements a service indicated by the flow definition data (Step S303). For example, in the case where the flow definition data defines that the service A, the service B, and the service D are to be executed, the component coordinating module 234 searches the component management table 223 to identify, for each service to be executed, what information is stored in the component ID field 2231, the component-provided quality field 2233, and the deployment state field 2234.

For example, for the service A, the component coordinating module 234 identifies information "C001, -, Serverα, "C004, support in-memory DB, Server β, " "C007, -, Server γ." Similarly, for the service B, the component coordinating module 234 identifies information "C002, -, Server α, " "C005, support in-memory DB, Server β," "C008, -, Server γ." For the service D, the component coordinating module 234 identifies information "C006, support in-memory DB, Server β," "C009, -, Server γ."

The component coordinating module 234 next sends the information for identifying the component to the messaging processing module 232 (Step S304). The component coordinating module 234 then ends the component coordinate processing.

In the case where the received request is a component deploying request ("Yes" in Step S302), the component coordinating module 234 deploys a specified component in a specified server (Step S305), and registers the deployed component in the component management table 223 (Step S306). Details of this processing are described later.

The flow of the component coordinate processing has now been described.

By executing the component coordinate processing, the service provider management server 200 can identify components capable of implementing services that constitute a business process and the service executing servers 300 in which the identified components are deployed.

The description returns to Step S202 of the messaging processing of FIG. 13.

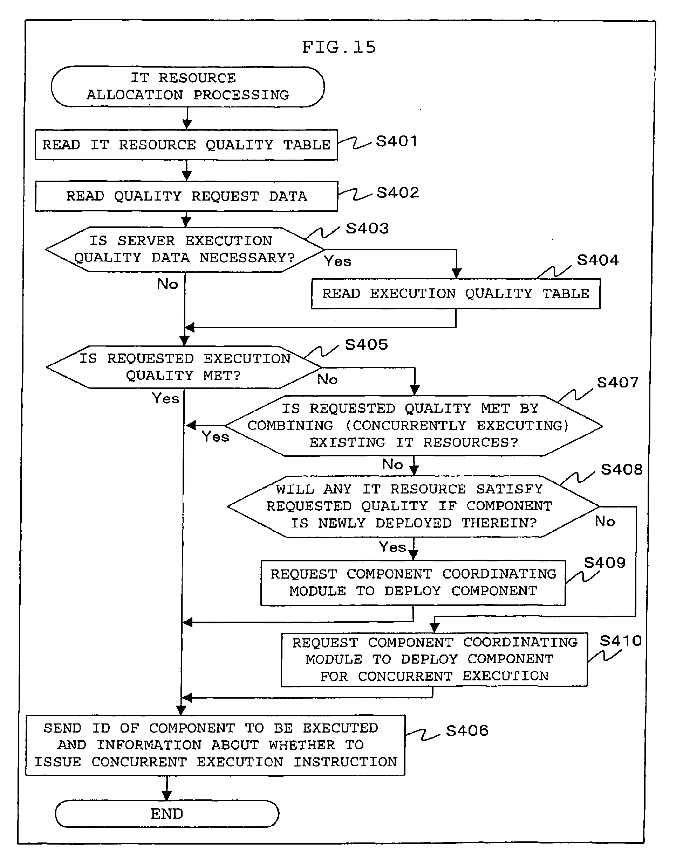

The messaging processing module 232 requests the IT resource allocation module 235 to allocate an IT resource to the service to be executed (Step S202). Specifically, the messaging processing module 232 hands over the quality request data of the business process to be executed, the information about components that are identified in Step S201 as components capable of implementing the service to the IT resource allocation module 235 in order to request IT resource allocation, and receives a component to be executed and information about whether or not a concurrent execution instruction is necessary. Processing executed by the IT resource allocation module 235 in response to the request is described with reference to an IT resource allocation processing flow of FIG. 15.

FIG. 15 is a diagram illustrating the flow of IT resource allocation processing.

The IT resource allocation module 235 first reads the IT resource quality table 224 (Step S401). The IT resource allocation module 235 then reads the quality request data handed over from the messaging processing module 232 (Step S402).

The IT resource allocation module 235 next determines whether or not the read quality request data includes one that needs actual performance information of an execution quality of the relevant service executing server 300 (Step S403). Specifically, the IT resource allocation module 235 determines whether or not the quality request data read in Step S402 contains a request about response time.

When the actual performance information of the quality is necessary ("Yes" in Step S403), the IT resource allocation module 235 reads actual quality information that is stored for each component in the execution quality table 225 (Step S404). The IT resource allocation module 235 then proceeds to Step S405.

When the actual performance information of the quality is not necessary ("No" in Step S403), the IT resource allocation module 235 proceeds to Step S405.

The IT resource allocation module 235 determines whether or not a quality requested in the quality request data is met (Step S405). Specifically, the IT resource allocation module 235 determines whether or not there is a resource (service executing server) that satisfies a quality requested in the quality request data by itself.

When there is a resource that satisfies every quality requested in the quality request data ("Yes" in Step S405), the IT resource allocation module 235 sends the IDs of components in this resource to the messaging processing module 232 (Step S406). The IT resource allocation module 235 then ends the IT resource allocation processing.

When no resource satisfies a quality requested in the quality request data by itself ("No" in Step S405), the IT resource allocation module 235 determines whether or not there is a combinationof existing IT resources that, when executed concurrently, satisfy every requested quality (Step S407). Specifically, when the request is about operating rate and components capable of implementing the service in question are already deployed in a plurality of service executing servers, the IT resource allocation module 235 determines whether or not the requested operating rate is met by executing the service on the plurality of service executing servers concurrently.

In the case where the requested quality is met by executing a plurality of existing IT resources concurrently ("Yes" in Step S407), the IT resource allocation module 235 specifies the IDs of a plurality of components to be executed and sends the IDs to the messaging processing module 232 along with an instruction to execute the components concurrently (Step S406). The IT resource allocation module 235 then ends the IT resource allocation processing.

In the case where the requested quality is not met by executing a plurality of existing IT resources concurrently ("No" in Step S407), the IT resource allocation module 235 determines whether or not newly deploying a component in an IT resource where no components have been deployed creates a resource that satisfies the requested quality by itself (Step S408) . Specifically, the IT resource allocation module 235 refers to the IT resource quality table 224 to determine from the IT resource-provided quality field 2242 whether or not there is an IT resource that satisfies the requested quality when executed alone. For example, when the requested quality of the business process to be executed is an operating rate of 99.9%, the IT resource allocation module 235 searches for a resource that has no component yet but, with a component deployed therein, will satisfy an operating rate of 99.9% by itself. When such a resource is found, the IT resource allocation module 235 determines that the requested quality is met.

In the case where deploying a component in an IT resource enables the IT resource to satisfy the requested quality by itself ("Yes" in Step S408), the IT resource allocation module 235 requests the component coordinating module 234 to deploy the component in the IT resource (Step S409). The IT resource allocation module 235 identifies the ID of the deployed component as the ID of a component to be executed, and sends this ID to the messaging processing module 232 without a concurrent execution instruction (Step S406). The IT resource allocation module 235 then ends the IT resource allocation processing.

In the case where deploying a component enables no IT resource to satisfy the requested quality by itself ("No" in Step S408), the IT resource allocation module 235 identifies an IT resource that provides a quality closest to the requested quality in executing the service. The IT resource allocation module 235 requests the component coordinating module 234 to deploy a component in this resource and also sends an instruction to the component coordinating module 234 to have an existing IT resource execute the processing concurrently (Step S410). An IT resource in which a component is to be deployed is identified here in the same manner as the one explained in the above description of the IT resource allocation module 235.

The IT resource allocation module 235 identifies the IDs of the deployed component and the existing deployed component as the IDs of components to be executed, and sends the IDs to the messaging processing module 232 along with a concurrent execution instruction (Step S406). The IT resource allocation module 235 then ends the IT resource allocation processing.

The flow of the IT resource allocation processing has now been described.

By executing the IT resource allocation processing, the service provider management server 200 can identify which component is to provide a service so that the requested quality of a business process is met.

Returning to FIG. 14, a description is given on processing that the component coordinating module 234 executes when requested to deploy a component in Step S409 or Step S410.

The component coordinating module 234 starts the component coordinate processing, determines in Step S302 that the received request is a component deploying request ("Yes" in Step S302), and deploys a specified component in a specified IT resource (server) (Step S305).

In Step S305, the component coordinating module 234 uses a component deployment management function (not shown) to identify a program that implements a component and other execution elements necessary for running this program (e.g., putting an in-memory DB function into operation and putting a logging function into operation), and to deploy the component in the server specified in Step S409 or S410 to have the component deployed therein. Information for identifying the execution elements is managed as server operating environment information by the component deployment management function from the start.

The component coordinating module 234 reads source code information (not shown) which is stored in the storage area of the storage section 220 in association with execution elements. Source codes that are associated with the execution elements identified by the component deployment management function are embedded in implementation codes of the component. The component coordinating module 234 performs compiling or other types of execution code generating processing on the implementation codes with the embedded source codes. In this way, the component coordinating module 234 can prepare the component for deployment by modifying the component to the operating environment via a security implementation code, a logging function implementation code, and the like before the component is deployed.

The component coordinating module 234 registers the deployed component in the component management table 223 under a new component ID (Step S306). The component coordinating module 234 then ends the component coordinate processing.

Specifics of the component coordinate processing that is executed when called up during IT resource allocation processing have now been described.

The description returns to Step S203 of the messaging processing of FIG. 13.

The messaging processing module 232 subsequently requests the service executing server 300 in which the component identified in Step S202 is deployed to execute the service (Step S203). The messaging processing module 232 then ends the messaging processing.

Though not shown in the drawing, in the service executing server 300 requested to execute the service, the messaging processing module 331 or the messaging processing module 381 calls up a component that executes the service to have the component perform the processing, and sends the result of the processing to the service provider management server 200.

The flow of the messaging processing has now been described.

By executing the messaging processing, the service provider management server 200 can execute a business process requested to be executed in a manner that satisfies the requested execution quality.

An embodiment of the present invention has been described above.

The distributedprocessing system 1 according to the embodiment of the present invention can be run in a distributed processing environment to meet a requested execution quality, which is requested on a business process basis, by combining existing IT resources and changing the component deployment environment.

A concrete description of the present invention has been given above through an embodiment. However, the present invention is not limited thereto and various modifications can be made without departing from the spirit of the invention.

For example, the service provider management server 200 of the above embodiment allocates services to the service executing servers 300, but the present invention is not limited thereto. The service provider management server 200 may have a processing module of service providing components so that services are allocated to the service provider management server 200 itself to be processed by the components.

This way, IT resources can be utilized more efficiently with ease.

To give another example, each service executing server 300 of the above embodiment executes a component upon receiving an instruction to execute a component, but the present invention is not limited thereto. The service executing server 300 may allocate services to other service executing servers 300 upon receiving an instruction to execute a business process from the client computer 100.. The service executing server 300 in this case includes function modules which implement the same processing that is performed by the execution flow management module 231, messaging processing module 232, execution quality management module 233, component coordinating module 234, IT resource allocation module 235, and execution quality monitoring module 236 of the service provider management server 200, and keeps the execution flow definition table 221, the execution quality definition table 222, the component management table223, and the IT resource quality table 224 in the storage section.

This way, IT resources can be utilized more efficiently with ease.

The service provider management server 200, the service executing servers 300, and the multi-DB server 400 in the above embodiment have a configuration of an open platform general-purpose machine. However, the present invention is not limited thereto and one of the servers may be implemented by a mainframe or other types of closed platform machine as long as the server can communicate with other nodes over a network.

The distributed processing system 1 can be merchandised not only as the whole system but also on a device basis or on a program component basis by which the operations of the devices are implemented.

While we have shown and described several embodiments in accordance with our invention, it shouldbe understood that disclosed embodiments are susceptible of changes and modifications without departing from the scope of the invention. Therefore, we do not intend to be bound by the details shown and described herein but intend to cover all such changes and modifications within the ambit of the appended claims, as interpreted by the description and drawings.

**Claims**

1.  A service provider management device which provides given business process information processing to a client terminal over a network, comprising:

    a storage unit which stores execution flow information, execution quality information, component management information, and IT resource quality information, the execution flow information being used to identify at least one service that constitutes the business process information processing and an execution flow of the at least one service, the execution quality information being used to identify an execution quality that is required for the business process information processing, the component management information being used to identifyan IT resource capable of executing a component that implements the service, the IT resource quality information being used to identify an execution quality that is provided by the IT resource;

    an execution flow management module which receives a request from the client terminal to provide the business process information processing, and refers to the storage unit to identify execution flow information of a service that constitutes the requested business process information processing and execution quality information of the requested business process information processing; and

a messaging processing module which, for each service that is identified by the execution flow information identified by the execution flow management module, reads the component management information to identify IT resources capable of executing the service; reads the IT resource quality information to determine whether or not an IT resource that satisfies the required execution quality by itself is included among the identified IT resources; when the IT resource that satisfies the required execution quality by itself is included, identifies the IT resource that satisfies the required execution quality by itself and requests the IT resource that satisfies the required execution quality by itself to execute the service; and when the IT resource that satisfies the required execution quality by itself is not included, identifies a combination of IT resources that together satisfy the required execution quality and requests the IT resources forming the combination to execute the service.

2. A service provider management device according to claim 1, further comprising a component coordinating module which deploys the component,
wherein, when the IT resource that satisfies the required execution quality by itself is not included among the identified IT resources, the messaging processing module reads the component management information anew and, when an IT resource that satisfies the required execution quality by itself but is not currently capable of executing the component is found as a result, instructs the component coordinating module to deploy the component in the found IT resource.

3. A service provider management device according to claim 2, wherein, when the IT resource that satisfies the required execution quality by itself is not included among the identified IT resources and deploying the component enables no IT resource to satisfy the required execution quality by itself, the messaging processing module identifies a combination of IT resources that together satisfy the required execution quality and, when the identified IT resources that together satisfy the required execution quality include an IT resource in which the component is not deployed, instructs the component coordinating module to deploy the component in the IT resource in which the component is not deployed.

4. A service provider management device according to claim 2, wherein, before deploying the component that is instructed to be deployed in the IT resource, the component coordinating module modifies the component to an operation environment of the IT resource in which the component is to be deployed.

5. A service provider management device according to claim 2, wherein, when the IT resource in which the component is instructed to be deployed does not have necessary middle ware, the component coordinating module deploys the middleware in the IT resource in which the component is instructed to be deployed along with the component.

6. A service provider management device according to claim 1, wherein the execution quality required for the business process information processing contains information about operating rate.

7. A service provider management device according to claim 6, wherein, when the required execution quality contains the information about operating rate, the messaging processing module identifies a combination of IT resources capable of executing the service that has an integrated operating rate that meets the required execution quality when the IT resources capable of executing the service are run concurrently.

8. A service provider management device according to claim 1, wherein the execution quality required for the business process information processing contains information about response time.

9. A service provider management device according to claim 8, wherein, when the required execution quality contains the information about response time, the messaging processing module identifies which of IT resources capable of executing the service has a shortest response time and, when the response time of the identified IT resource does not meet the required execution quality, deployes the component in as many IT resources that do not have the component as a number determined by a value of a ratio of the response time of the identified IT resource to the required execution quality.

10. A service provider management device according to claim 1, wherein:

the execution flow management module receives information about whether or not there is a special request from the client terminal along with the request to provide the business process information processing; and when there is the special request, the execution flow management module identifies execution quality information that is associated with the special request in identifying execution quality information of the requested business process information processing.

11. A program which causes a computer to execute a service provider management procedure for providing given business process information processing to a client terminal over a network, the program further causing the computer to function as:

control means; and
storage means which stores execution flow information, execution quality information, component management information, and IT resource quality information, the execution flow information being used to identify at least one service that constitutes the business process information processing and an execution flow of the at least one service, the execution quality information being used to identify an execution quality that is required for the business process information processing, the component management information being used to identify an IT resource capable of executing a component that implements the service, and the IT resource quality information being used to identify an execution quality that is provided by the IT resource, the program causing the control means to execute:

an execution flow management procedure for receiving a request from the client terminal to provide the business process information processing, and referring to the storage means to identify execution flow information of a service that constitutes the requested business process information processing and execution quality information of the requested business process information processing; and
a messaging processing procedure for, for each service that is identified by the execution flow information identified in the execution flow management procedure, reading the component management information to identify IT resources capable of executing the service; reading the IT resource quality information to determine whether or not an IT resource that satisfies the required execution quality by itself is included among the identified IT resources; when the IT resource that satisfies the required execution quality by itself is included, identifying the IT resource that satisfies the required execution quality by itself and requests the IT resource that satisfies the required execution quality by itself to execute the service; and when the IT resource that satisfies the required execution quality by itself is not included, identifying a combination of IT resources that together satisfy the required execution quality and requests the IT resources forming the combination to execute the service.

12. A service provider management method performed by a service provider management device which provides given business process information processing to a client terminal over a network, the service provider management device comprising a storage unit which stores execution flow information, execution quality information, component management information, and IT resource quality information, the execution flow information being used to identify at least one service that constitutes the business process information processing and an execution flow of the at least one service, the execution quality information being used to identify an execution quality that is required for the business process information processing, the component management information being used to identify an IT resource capable of executing a component that implements the service, and the IT resource quality information being used to identify an execution quality that is provided by the IT resource, the service provider management method comprising:

an execution flow management step of receiving a request from the client terminal to provide the business process information processing, and referring to the storage unit to identify execution flow information of a service that constitutes the requested business process information processing and execution quality information of the requested business process information processing; and
a messaging processing step of, for each service that is identified by the execution flow information identified in the execution flow management step, reading the component management information to identify IT resources capable of executing the service; reading the IT resource quality information to determine whether or not an IT resource that satisfies the required execution quality by itself is included among the identified IT resources; when the IT resource that satisfies the required execution quality by itself is included, identifying the IT resource that satisfies the required execution quality by itself and requests the IT resource that satisfies the required execution quality by itself to execute the service; and when the IT resource that satisfies the required execution quality by itself is not included, identifying a combination of IT resources that together satisfy the required execution quality and requests the IT resources forming the combination to execute the service.

FIG.1

CLIENT TERMINAL
100

1

SERVICE PROVIDER
MANAGEMENT SERVER
200

150

MULTI-DB
SERVER
400

SERVICE EXECUTING
SERVER
300

## FIG.2

**CLIENT TERMINAL** 100

| STORAGE SECTION 120 | CONTROL SECTION 130 |
| | BROWSER MODULE 131 |
| INPUT SECTION 141 | |
| OUTPUT SECTION 142 | COMMUNICATION SECTION 143 |

150

**SERVICE PROVIDER MANAGEMENT SERVER** 200

COMMUNICATION SECTION 241

**CONTROL SECTION** 230

| EXECUTION FLOW MANAGEMENT MODULE 231 | | |
| | EXECUTION QUALITY MANAGEMENT MODULE 233 | |
| MESSAGING PROCESSING MODULE 232 | COMPONENT COORDINATING MODULE 234 | |
| | IT RESOURCE ALLOCATION MODULE 235 | |
| | EXECUTION QUALITY MONITORING MODULE 236 | |

**STORAGE SECTION** 220 221

| EXECUTION FLOW DEFINITION TABLE 221 |
| EXECUTION QUALITY DEFINITION TABLE 222 |
| COMPONENT MANAGEMENT TABLE 223 |
| IT RESOURCE QUALITY TABLE 224 |
| EXECUTION QUALITY TABLE 225 |

FIG.3

SERVICE EXECUTING SERVER α    300 (305)

150

330 CONTROL SECTION

341 COMMUNICATION SECTION

331 MESSAGING PROCESSING MODULE

332 SERVICE A EXECUTING COMPONENT

333 SERVICE B EXECUTING COMPONENT

334 SERVICE C EXECUTING COMPONENT

335 EXECUTION QUALITY MONITORING MODULE

320 STORAGE SECTION

321 EXECUTION QUALITY TABLE

FIG.4

FIG.5

FIG.6

221

2211

2212

| BUSINESS PROCESS ID | FLOW DEFINITION DATA |
|---|---|
| BP001 | A → B → D |
| BP002 | A → B → C |
| ... | ... |

FIG.7

222

2221  2222  2223

| BUSINESS PROCESS ID | SPECIAL REQUEST | QUALITY REQUEST DATA |
|---|---|---|
| BP001 | NOT ATTACHED | OPERATING RATE = 99.9% OR MORE<br>AVERAGE RESPONSE TIME = 10 msec OR LESS |
| BP002 | NOT ATTACHED | OPERATING RATE = 99% OR MORE<br>AVERAGE RESPONSE TIME = 200 msec OR LESS |
| BP001 | ATTACHED | OPERATING RATE = 99.9999% OR MORE<br>AVERAGE RESPONSE TIME = 10 msec OR LESS |

FIG.8

223

| COMPONENT ID | PROVIDED SERVICE NAME | COMPONENT-PROVIDED QUALITY | DEPLOYMENT STATE |
|---|---|---|---|
| 2 2 3 1 | 2 2 3 2 | 2 2 3 3 | 2 2 3 4 |
| C001 | A | | SERVER $\alpha$ |
| C002 | B | | SERVER $\alpha$ |
| C003 | C | | SERVER $\alpha$ |
| C004 | A | SUPPORT IN-MEMORY DB | SERVER $\beta$ |
| C005 | B | SUPPORT IN-MEMORY DB | SERVER $\beta$ |
| C006 | D | SUPPORT IN-MEMORY DB | SERVER $\beta$ |
| C007 | A | | SERVER $\gamma$ |
| C008 | B | | SERVER $\gamma$ |
| C009 | D | | SERVER $\gamma$ |

FIG.9

224

2241        2242

| RESOURCE ID | IT RESOURCE-PROVIDED QUALITY |
|---|---|
| SERVER $\alpha$ | OPERATING RATE = 99% |
| SERVER $\beta$ | OPERATING RATE = 99.9%, IN-MEMORY DB |
| SERVER $\gamma$ | OPERATING RATE = 99.9% |

# FIG.10

225

2251

2252

| RESOURCE ID | QUALITY DATA |
|---|---|
| SERVER $\alpha$ | C001: AVERAGE RESPONSE TIME = 50msec<br>C002: AVERAGE RESPONSE TIME = 70msec<br>C003: AVERAGE RESPONSE TIME = 60msec |
| SERVER $\beta$ | C004: AVERAGE RESPONSE TIME = 1msec<br>C005: AVERAGE RESPONSE TIME = 1msec<br>C006: AVERAGE RESPONSE TIME = 2msec |
| SERVER $\gamma$ | C007: AVERAGE RESPONSE TIME = 20msec<br>C008: AVERAGE RESPONSE TIME = 30msec<br>C009: AVERAGE RESPONSE TIME = 30msec |

# FIG.11

EXECUTION FLOW MANAGEMENT PROCESSING

S001

RECEIVE REQUEST TO
EXECUTE BUSINESS PROCESS

S002

READ RELEVANT FLOW DEFINITION DATA
OUT OF EXECUTION FLOW DEFINITION TABLE

S003

REQUEST EXECUTION QUALITY MANAGEMENT
MODULE TO READ QUALITY REQUEST DATA

S004

HAND OVER BUSINESS PROCESS ID
AND QUALITY REQUEST DATA
TO MESSAGING PROCESSING MODULE

END

FIG.12

```
        ╭─────────────────────────────╮
        │    EXECUTION QUALITY        │
        │  MANAGEMENT PROCESSING      │
        ╰─────────────────────────────╯
                     │
                     ▼
        ┌─────────────────────────────┐
        │ RECEIVE BUSINESS PROCESS     │  ~ S101
        │ INFORMATION AND SPECIAL      │
        │ REQUEST INFORMATION          │
        └─────────────────────────────┘
                     │
                     ▼
          ◁─────────────────────────▷   ~ S102
          │  IS THERE SPECIAL        │
          │  REQUEST INFORMATION?    │
          ◁─────────────────────────▷
             No  │          │  Yes
```

IS THERE SPECIAL REQUEST INFORMATION?

READ QUALITY REQUEST DATA WITH SPECIAL REQUEST INFORMATION ATTACHED OUT OF EXECUTION QUALITY DEFINITION TABLE    ~ S103

READ RELEVANT QUALITY REQUEST DATA OUT OF EXECUTION QUALITY DEFINITION TABLE    ~ S104

SEND QUALITY REQUEST DATA TO EXECUTION FLOW MANAGEMENT MODULE    ~ S105

END

FIG.13

```
        ┌──────────────────────────────┐
        │    MESSAGING  PROCESSING      │
        └──────────────────────────────┘
                      │
                      ▼
  ┌────────────────────────────────────────────┐
  │  MAKE  INQUIRY  TO  COMPONENT  COORDINATING  │ ～S201
  │  MODULE  ABOUT  COMPONENT  DEPLOYMENT  STATE │
  └────────────────────────────────────────────┘
                      │
                      ▼
  ┌────────────────────────────────────────────┐
  │      REQUEST  IT  RESOURCE  ALLOCATION       │ ～S202
  │      MODULE  TO  ALLOCATE  IT  RESOURCE      │
  └────────────────────────────────────────────┘
                      │
                      ▼
  ┌────────────────────────────────────────────┐
  │   REQUEST  SERVICE  EXECUTING  SERVER        │ ～S203
  │         TO  PERFORM  PROCESSING              │
  └────────────────────────────────────────────┘
                      │
                      ▼
              ┌───────────────┐
              │      END       │
              └───────────────┘
```

## FIG.14

```
    ┌──────────────────────────────────────────┐
    │   COMPONENT COORDINATE PROCESSING          │
    └──────────────────────────────────────────┘
                        │
                        ▼
    ┌──────────────────────────────────────────┐
    │           RECEIVE REQUEST                  │  ⌇ S301
    └──────────────────────────────────────────┘
                        │
                        ▼
    ┌──────────────────────────────────────────┐  ⌇ S302
    <        IS RECEIVED REQUEST                 >
    <    FOR DEPLOYING COMPONENT?                >──── Yes
    └──────────────────────────────────────────┘
                     │ No
                     ▼
```

FIG.14 flowchart

COMPONENT COORDINATE PROCESSING

RECEIVE REQUEST — S301

IS RECEIVED REQUEST FOR DEPLOYING COMPONENT? — S302

No:

SEARCH COMPONENT MANAGEMENT TABLE FOR COMPONENTS CAPABLE OF EXECUTING SERVICE — S303

SEND INFORMATION FOR IDENTIFYING COMPONENT TO MESSAGING PROCESSING MODULE — S304

Yes:

DEPLOY SPECIFIED COMPONENT IN SPECIFIED SERVER — S305

REGISTER DEPLOYED COMPONENT TO COMPONENT MANAGEMENT TABLE — S306

END

## FIG.15

```
        ┌─────────────────────────────┐
        │     IT RESOURCE              │
        │  ALLOCATION PROCESSING       │
        └─────────────────────────────┘
                      │
                      ▼
        ┌─────────────────────────────┐
        │ READ IT RESOURCE QUALITY TABLE │──── S401
        └─────────────────────────────┘
                      │
                      ▼
        ┌─────────────────────────────┐
        │   READ QUALITY REQUEST DATA  │──── S402
        └─────────────────────────────┘
                      │
                      ▼
         ╱─────────────────────────╲          S403
        ⟨  IS SERVER EXECUTION      ⟩
         ⟨ QUALITY DATA NECESSARY?  ⟩── Yes ──┐
          ╲─────────────────────────╱         │
                      │                        ▼
                     No          ┌───────────────────────────┐  S404
                      │          │ READ EXECUTION QUALITY TABLE │
                      │          └───────────────────────────┘
                      │◄──────────────────────┘
                      ▼
         ╱─────────────────────────╲          S405
        ⟨  IS REQUESTED EXECUTION   ⟩
         ⟨    QUALITY MET?          ⟩── No ──┐
          ╲─────────────────────────╱        │
                      │                       ▼
                    Yes      ╱────────────────────────────────╲  S407
                      │     ⟨  IS REQUESTED QUALITY MET BY      ⟩
                      │  ◄──⟨ COMBINING (CONCURRENTLY EXECUTING)⟩
                      │ Yes  ⟨   EXISTING IT RESOURCES?         ⟩
                      │       ╲────────────────────────────────╱
                      │                    │
                      │                   No
                      │                    ▼
                      │     ╱────────────────────────────────╲  S408
                      │    ⟨  WILL ANY IT RESOURCE SATISFY     ⟩
                      │    ⟨  REQUESTED QUALITY IF COMPONENT   ⟩── No ──┐
                      │    ⟨  IS NEWLY DEPLOYED THEREIN?        ⟩        │
                      │     ╲────────────────────────────────╱          │
                      │                  │                              │
                      │                 Yes                             │
                      │                  ▼                              │
                      │     ┌───────────────────────────┐  S409         │
                      │     │ REQUEST COMPONENT COORDINATING │           │
                      │     │ MODULE TO DEPLOY COMPONENT  │              │
                      │     └───────────────────────────┘               │
                      │◄────────────┘                                   │
                      │                                                 ▼
                      │     ┌─────────────────────────────────┐  S410
                      │     │ REQUEST COMPONENT COORDINATING    │
                      │     │ MODULE TO DEPLOY COMPONENT        │
                      │     │ FOR CONCURRENT EXECUTION          │
                      │     └─────────────────────────────────┘
                      │◄────────────┘
                      ▼
        ┌─────────────────────────────────────────┐
        │ SEND ID OF COMPONENT TO BE EXECUTED       │── S406
        │ AND INFORMATION ABOUT WHETHER TO          │
        │ ISSUE CONCURRENT EXECUTION INSTRUCTION    │
        └─────────────────────────────────────────┘
                      │
                      ▼
        ┌─────────────────────────────┐
        │           END               │
        └─────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009125828 A
- JP 2008257694 A